# EUROPÄISCHE PATENTSCHRIFT

(11) **EP 1 479 023 B1**
(45) Veröffentlichungstag und Bekanntmachung des Hinweises auf die Patenterteilung: **26.10.2005**
(21) Anmeldenummer: 03714660.2
(22) Anmeldetag: 25.02.2003
(51) Int. Cl.: G06F 17/60

(54) **VERFAHREN ZUM PROJEKTIEREN UND/ODER KONFIGURIEREN EINES PROJEKTES**
METHOD FOR PLANNING AND/OR CONFIGURING A PROJECT
PROCEDE POUR PLANIFIER ET/OU CONFIGURER UN PROJET

(30) Priorität: 25.02.2002 DE 10207831
(43) Veröffentlichungstag der Anmeldung: 24.11.2004
(73) Patentinhaber: SIEMENS AKTIENGESELLSCHAFT, 80333 München (DE)
(72) Erfinder: REUTER, Thomas, 76149 Karlsruhe (DE)
(86) Internationale Anmeldenummer: PCT/DE2003/000610
(87) Internationale Veröffentlichungsnummer: WO 2003/073334

(56) Entgegenhaltungen:
- US-B1- 6 263 487
- US-B1- 6 298 319

## Beschreibung

Die Erfindung betrifft ein Verfahren zum Projektieren und/oder Konfigurieren eines Projektes, welches eine Automatisierungseinrichtung zum Steuern einer technischen Anlage repräsentiert, wobei in einem Engineeringsystem die für die Projektierung und/oder Konfigurierung der Anlage erforderlichen Projektdaten hinterlegbar sind. Darüber hinaus betrifft die Erfindung ein Engineeringsystem zum Projektieren und/oder Konfigurieren eines Projektes.

Ein derartiges Verfahren ist aus dem Siemens-Katalog ST PCS 7, Kapitel 1, Ausgabe 2001 bekannt. Ein Prozessleitsystem zur Steuerung einer technischen Anlage weist ein Engineeringsystem auf, welches insbesondere vorgesehen ist zum Konfigurieren von Hard- und/oder Softwarekomponenten, zum Projektieren von Kommunikationsnetzwerken, zum Projektieren von kontinuierlichen und sequenziellen Prozessabläufen, ferner zum Design von Bedien- und Beobachtungsstrategien sowie zum Erstellen von Rezepten für Chargen- bzw. Batchprozesse. Die erforderlichen Projektdaten für die Projektierung und/oder Konfigurierung eines Projektes, welches die zu entwerfende Automatisierungseinrichtung repräsentiert, sind z. B. in einem Speicher eines Programmiergerätes oder eines Servers hinterlegbar, wobei die Programmiergeräte, welche in einem Multiuser-Betrieb an der Projektierung und/oder Konfigurierung beteiligt sind, auf diesen gemeinsamen Speicher zugreifen können. Dadurch, dass die Projektdaten zentral abgelegt werden, kann es vorkommen, dass die Projektdaten in Abhängigkeit der Komplexität der Automatisierungseinrichtung sehr umfangreich sind. Ferner kann es während des Projektierens in einem so genannten Multiuser-Betrieb, insbesondere wenn viele Projektierer gleichzeitig auf die zentral abgelegten Projektdaten konkurrierend über das Netz zugreifen, zu erheblichen Performanceproblemen und langen Reaktionszeiten kommen. Der Projektierer ist dann heute oft gezwungen, Teile der Projektdaten aus den Gesamtprojektdaten auf sein Programmiergerät herauszukopieren, dezentral ohne den Kontext des Gesamtprojektes zu projektieren und anschließend wieder in das Gesamtprojekt zu integrieren. Diese Projektierschritte sind fehleranfällig und mit einem hohen Arbeitsaufwand für die Hantierung der Daten und der anschließenden Korrektur der Gesamtprojektdaten verbunden. Außerdem kann das Abgleichen der Engineeringdaten der Automatisierungssysteme, der Bedien- und Beobachtungssysteme sowie der Batchsysteme nur im Kontext der Gesamtprojektdaten erfolgen, wobei dieses Abgleichen gewöhnlich mit einem hohen Zeitaufwand und einer projektweiten Unterbrechung der Projektierungsarbeiten verbunden ist.

Ein ähnliches Verfahren mit derselben Problematik ist aus der Patentschrift US-B-6,263,487 bekannt.

Der vorliegenden Erfindung liegt die Aufgabe zugrunde, ein Verfahren zum Projektieren und/oder Konfigurieren eines Projektes der eingangs genannten Art zu vereinfachen. Darüber hinaus ist ein Engineeringsystem anzugeben, welches die Projektierung und/oder Konfigurierung eines Projektes verbessert.

Diese Aufgabe wird im Hinblick auf das Verfahren durch die im kennzeichnenden Teil des Anspruchs 1, im Hinblick auf das Engineeringsystem durch die im kennzeichnenden Teil des Anspruchs 3 angegebenen Maßnahmen gelöst.

Vorteilhaft ist, dass nicht die Projektdaten selbst, sondern lediglich die Datensätze zentral hinterlegt werden, die den Programmiergeräten anzeigen, auf welchen Programmiergeräten welche Teilprojektdaten hinterlegt sind. Dadurch sind die Projektdaten des Projekts leicht hantierbar. Benötigt z. B. ein Programmiergerät Teilprojektdaten eines weiteren Programmiergerätes, so greift dieses Programmiergerät direkt auf die Daten des weiteren Programmiergerätes zu. Aufgrund der Verteilung und somit Dezentralisierung der Projektdaten im Gegensatz zu der aus dem Stand der Technik bekannten zentralen Datenhaltung wird die Performance während des gleichzeitigen Projektierens im Multiuser-Betrieb drastisch verbessert, da die für die lokale Projektierung relevanten Daten zum größten Teil auch auf dem lokalen Programmiergerät des jeweiligen Benutzers gespeichert sind. Somit kann sehr schnell, ohne Multiuser-Konflikte und ohne Engpässe im Rechnernetz auf die relevanten und lokal abgelegten Projektdaten zugegriffen werden, ohne den Zugriff auf die Gesamtprojektdaten zu verlieren. Die Performance im Multiuser-Betrieb ist somit in der Regel annähernd identisch zu der Performance im Single-User-Betrieb. Außerdem ist das Integrieren von Teilprojektdaten in das Gesamtprojekt nicht mehr erforderlich. Der Datenabgleich aber auch die Konsistenzprüfung bzw. Plausibilisierung der Daten der am Gesamtprojekt beteiligten Programmiergeräte kann direkt über das Netz erfolgen. Der erforderliche Zeitaufwand zum Abgleichen der Daten der am Projekt beteiligten Programmiergeräte wird somit ebenfalls erheblich verkürzt. Ferner wird durch die dezentrale Projektdatenhaltung eine Fehlerbehandlung vereinfacht. Während der Projektierungs- und/oder Konfigurierungsphase auftretende Fehler "gefährden" nicht die Gesamtprojektdaten, sondern lediglich Teilprojektdaten. Derartige Fehler sind einfach lokalisierbar und werden durch das Programmiergerät, welches das mit Fehlern behaftete Teilprojekt bearbeitet, analysiert und behoben. Darüber hinaus ermöglicht die dezentrale Projektdatenhaltung eine bequeme Hantierung neuer Versionen von Teilprojektdaten, die einfach in das Gesamtprojekt integrierbar sind.

In einer Ausgestaltung der Erfindung gemäß der im Anspruch 2 angegebenen Maßnahmen ist,vorgesehen, dass anzeigbar ist, ob auf die Projektdaten des jeweiligen Programmiergerätes zugegriffen werden kann. Dadurch kann ein Projektierer an seinem Programmiergerät erkennen, welche Programmiergeräte gerade an dem Engineeringsystem angeschlossen sind; das bedeutet, er kann erkennen, auf welche Projektdaten anderer Programmiergeräte er gerade zugreifen kann.

Weitere vorteilhafte Ausgestaltungen der Erfindung ergeben sich aus den weiteren Unteransprüchen.

Anhand der Zeichnung, in der ein Ausführungsbeispiel der Erfindung veranschaulicht ist, werden im Folgenden die Erfindung sowie Ergänzungen und Weiterbildungen näher beschrieben und erläutert.

Es zeigen:
- Figur 1: ein Engineeringsystem und
- Figur 2: ein Prozessleitsystem.

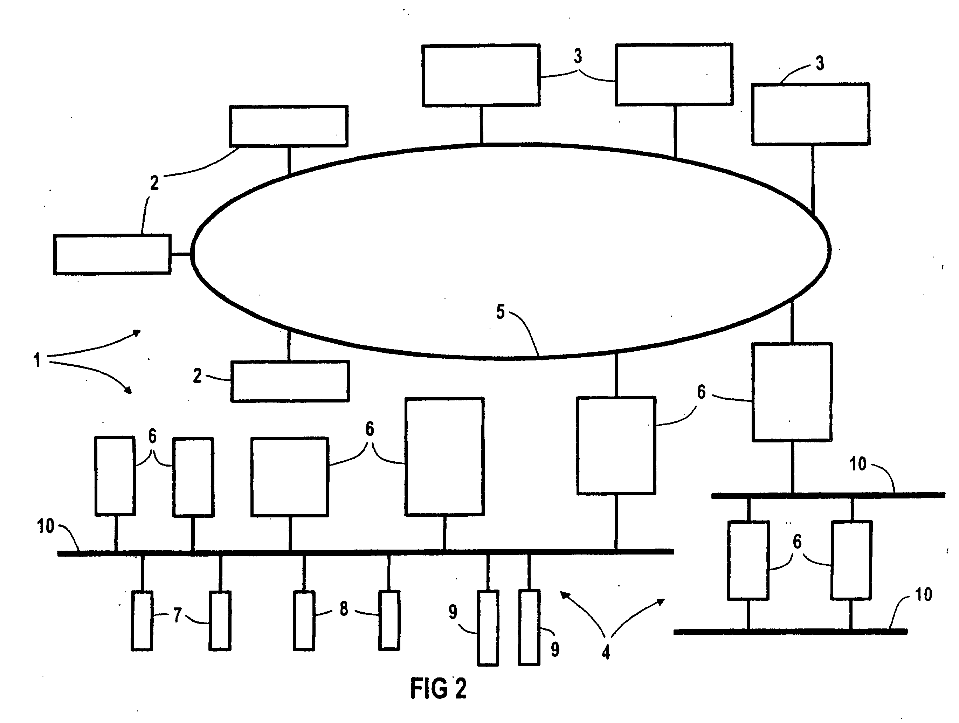

Zunächst wird auf Figur 2 verwiesen, in welcher ein an sich bekanntes Prozessleitsystem 1 dargestellt ist. Das Prozessleitsystem 1 weist ein Engineeringsystem 2, ein Bedien- und Beobachtungssystem 3 und eine projektierte und konfigurierte Automatisierungseinrichtung 4 auf, wobei das Engineeringsystem 2 zur Projektierung und/oder Konfigurierung der Automatisierungseinrichtung 4 vorgesehen ist. Die Automatisierungseinrichtung 4, welche über ein Bussystem 5 und hier nicht dargestellte Busanschaltungen mit dem Engineeringsystem 2 und dem Bedien- und Beobachtungssystem 3 verbunden ist, umfasst unterschiedliche Automatisierungsgeräte 6, ferner Aktoren 7 und Sensoren 8 sowie weitere zur Steuerung einer technischen Anlage erforderliche Automatisierungskomponenten 9. Die Automatisierungsgeräte 6, welche über das Bussystem 5 und/oder weitere geeignete Bussysteme 10 miteinander verbunden sind, können unterschiedlich ausgebildet sein. So sind gewöhnlich Automatisierungsgeräte zur Lösung kleiner, mittlerer und größerer Automatisierungsaufgaben innerhalb der Automatisierungseinrichtung 4 vorgesehen, wobei zur Lösung kleiner Automatisierungsaufgaben mikro-speicherprogrammierbare Steuerungen, zur Lösung mittlerer Automatisierungsaufgaben speicherprogrammierbare Kleinsteuerungen und zur Lösung komplexerer Automatisierungsaufgaben leistungsstarke speicherprogrammierbare Steuerungen einsetzbar sind.

Mit welchen Hard- und Softwarekomponenten, d. h. mit welchen Automatisierungsgeräten, Bedien- und Beobachtungsgeräten, Bussystemen, Aktoren und Sensoren, und mit welchen Steuerprogrammen die Automatisierungseinrichtung 4 zu versehen ist, ist abhängig von der Komplexität der zu steuernden technischen Anlage und der Steueraufgabe, wobei die erforderlichen Hard- und Softwarekomponenten der Automatisierungseinrichtung 4 durch das Engineeringsystem 2 projektierbar und/oder konfigurierbar sind.

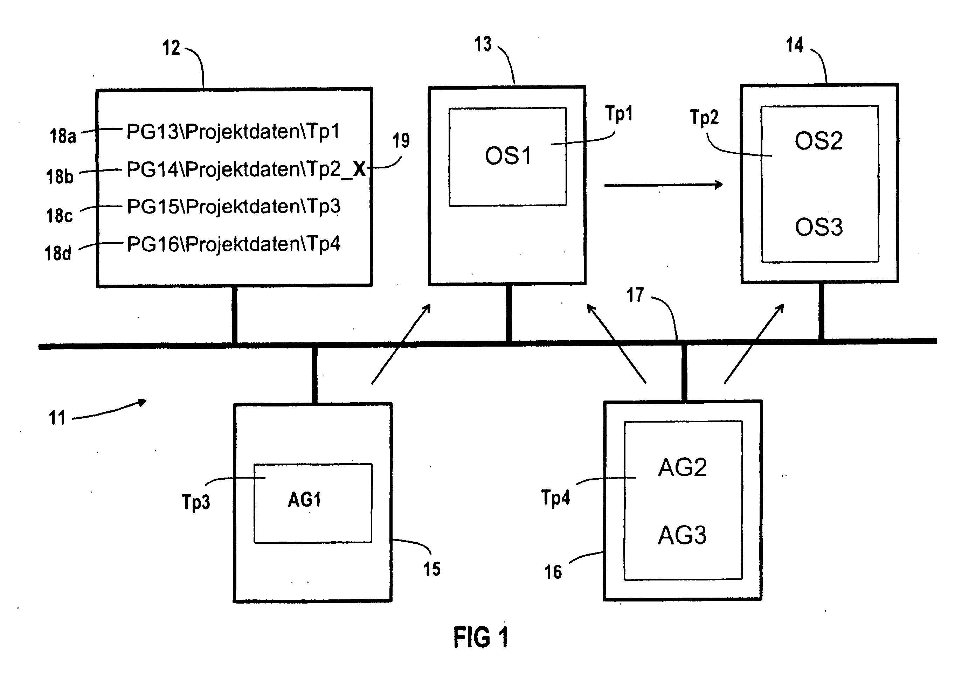

Im Folgenden wird auf Figur 1 verwiesen, in welcher ein Engineeringsystem 11 zur Projektierung und/oder Konfigurierung von Hard- und Softwarekomponenten einer Automatisierungseinrichtung dargestellt ist. Dazu weist im vorliegenden Beispiel das Engineeringsystem 11 eine Management-Einheit 12 und vier Programmiergeräte 13, 14, 15, 16 auf, wobei die Management-Einheit 12 und die Programmiergeräte 13, 14, 15, 16 über ein Bussystem 17 miteinander verbunden sind. Die Management-Einheit 12, die selbstverständlich Teil eines der Programmiergeräte 13 bis 16 sein kann, teilt ein Projekt, welches die Automatisierungseinrichtung repräsentiert und welches aufgrund der zu lösenden Automatisierungsaufgabe die Informationen über die erforderlichen Hard- und Softwarekomponenten beinhaltet, in vier Teilprojekte Tp1, Tp2, Tp3, Tp4 auf, von denen das Teilprojekt Tp1 durch das Programmiergerät 13, das Teilprojekt Tp2 durch das Programmiergerät 14 und entsprechend das Teilprojekt Tp3 durch das Programmiergerät 15 und das Teilprojekt Tp4 durch das Programmiergerät 16 zu bearbeiten ist. Dazu sind alle für die Projektierung und/oder Konfigurierung erforderlichen Hard- und Softwarekomponenten der Automatisierungseinrichtung auf Anzeigeeinrichtungen der Programmiergeräte 13 bis 16 virtuell darstellbar. Z. B. sind auf den Anzeigeeinrichtungen darstellbar die Gerätesichten von Automatisierungsgeräten, von Bedien- und Beobachtungssystemen und weiterer Hardwarekomponenten wie z. B. Ein- und Ausgabebaugruppen, von Feldgeräten, von Bussystemen sowie Sichten von Softwarebausteinen zum Erstellen von Steuerprogrammen für die Automatisierungsgeräte. Das Teilprojekt Tp1 umfasst die Projektierung einer Bedien- und Beobachtungsstation OS1, das Teilprojekt Tp2 die Projektierung von Bedien- und Beobachtungsstationen OS2, OS3, das Teilprojekt Tp3 die Projektierung eines Automatisierungsgerätes AG1 und das Teilprojekt Tp4 die Projektierung von Automatisierungsgeräten AG2, AG3, wobei die Teilprojekte Tp1 und Tp3, die Teilprojekte Tp1 und Tp2 sowie die Teilprojekte Tp2 und Tp4 in Wirkverbindung stehen, was in Figur 1 durch Pfeile angedeutet ist. Z. B. stehen die Teilprojekte Tp2 und Tp4 derart in Wirkverbindung, dass Batchdaten der Automatisierungsgeräte AG2, AG3 zu den Bedien- und Beobachtungsstationen OS2, OS3 zu exportieren sind oder dass Verbindungsdaten zwischen dem Automatisierungsgerät AG1 und der Bedien- und Beobachtungsstation OS1 zu transferieren sind. In einem hier nicht dargestellten Speicher der Management-Einheit 12 hinterlegt die Management-Einheit 12 Datensätze 18a, 18b, 18c, 18d, die den Programmiergeräten 13, ... 16 anzeigen, welche Teilprojekte Tp1, Tp2, Tp3, Tp4 mit welchen Programmiergeräten 13, ... 16 in Wirkverbindung stehen. Im vorliegenden Beispiel zeigt der Datensatz 18a den Programmiergeräten 13, ... 16 an, dass Teilprojektdaten des Teilprojekts Tp1 auf dem Programmiergerät 13 hinterlegt sind und dass dieses Teilprojekt Tp1 durch dieses Programmiergerät 13 bearbeitet wird. Entsprechend zeigt der Datensatz 18b an, dass Teilprojektdaten des Teilprojekts Tp2 auf dem Programmiergerät 14, ferner der Datensatz 18c, dass Teilprojektdaten des Teilprojekts Tp3 auf dem Programmiergerät 15 und der Datensatz 18d, dass Teilprojektdaten des Teilprojekts Tp4 auf dem Programmiergerät 16 hinterlegt sind und dass die Teilprojekte Tp2, Tp3, Tp4 durch die entsprechenden Programmiergeräte 14, 15, 16 bearbeitet werden. Für den Fall, dass das Programmiergerät 13, welches das Teilprojekt Tp1 bearbeitet, Projektdaten des Teilprojektes Tp4 benötigt, greift das Programmiergerät 13 zunächst lesend auf die Management-Einheit 12 zu und erkennt aufgrund des Datensatzes 18d, dass das Teilprojekt Tp4 durch das Programmiergerät 16 bearbeitet wird. Die Information wird in der Art und Weise genutzt, dass das Programmiergerät 13 direkt auf das Programmiergerät 16 zugreift, um die benötigten Projektdaten des Teilprojektes Tp4 auszulesen; das bedeutet, die Daten werden zwischen den Programmiergeräten 13 und 16 direkt transferiert.

Es kann nun vorkommen, dass z. B. das Programmiergerät 16 Projektdaten des Teilprojektes Tp2 benötigt, welches durch das Programmiergerät 14 bearbeitet wird, das Programmiergerät 14 allerdings gerade nicht an den Bus 17 angeschlossen ist. In diesem Fall wird dem Programmiergerät 16 durch die Management-Einheit 12 angezeigt, dass auf die Projektdaten des Programmiergerätes 14 zum aktuellen Zeitpunkt nicht zugegriffen werden kann. Dazu weist die Management-Einheit 12 dem Datensatz 18b eine Kennung 19 zu, die den Programmiergeräten 13, 15 und 16 anzeigt, dass das Programmiergerät 14 gerade nicht an den Bus 17 angeschlossen ist und daher auf die Projektdaten des Teilprojekts Tp2 nicht zugegriffen werden kann. Für den Fall, dass das Programmiergerät 14 an den Bus angeschlossen wird, meldet sich das Programmiergerät 14 bei der Management-Einheit 12 an, die daraufhin die Kennung 19 löscht. Dadurch wird den Programmiergeräten 13, 15 und 16 angezeigt, dass auf die Projektdaten des Teilprojekts Tp2 nun zugegriffen werden kann.

## Patentansprüche

1. Verfahren zum Projektieren und/oder Konfigurieren eines Projektes, welches eine Automatisierungseinrichtung (4) zum Steuern einer technischen Anlage repräsentiert, wobei in einem Engineeringsystem (11) die für die Projektierung und/oder Konfigurierung der Automatisierungseinrichtung (4) erforderlichen Projektdaten hinterlegbar sind, **gekennzeichnet durch** folgende Verfahrensschritte:
- Unterteilen des Projektes in mehrere Teilprojekte (Tp1, ...),
- Projektieren und/oder Konfigurieren der Teilprojekte (Tp1, ...) auf verschieden verbindbaren Programmiergeräten (13, ...), wobei Projektdaten eines Teilprojektes (Tp1, ...) auf dem Programmiergerät (13, ...) hinterlegt werden, auf welchem das Teilprojekt (Tp1) projektiert und/oder konfiguriert wurde,
- zentrales Abspeichern von Datensätzen (18a, ...), die anzeigen, welche Teilprojekte (Tp1, ...) mit welchen Programmiergeräten (13, ...) in Wirkverbindung stehen, wobei diese Datensätze (18a, ...) **durch** die Programmiergeräte (13, ...) auslesbar und die Projektdaten der Teilprojekte (Tp1, ...) der in Wirkverbindung stehenden Programmiergeräte (13, ...) zwischen diesen Programmiergeräten (13, ....) direkt transferierbar sind.

2. Verfahren nach Anspruch 1, **dadurch gekennzeichnet, dass** anzeigbar ist, ob auf die Projektdaten des jeweiligen Programmiergerätes (13, ...) zugegriffen werden kann.

3. Engineeringsystem zum Projektieren und/oder Konfigurieren eines Projektes, welches eine Automatisierungseinrichtung (4) einer zu steuernden technischen Anlage repräsentiert, wobei in dem Engineeringsystem (11) die für die Projektierung und/oder Konfigurierung der Automatisierungseinrichtung (4) erforderlichen Projektdaten hinterlegbar sind, **dadurch gekennzeichnet, dass**
- das Engineeringsystem mit einer Management-Einheit (12) versehen ist, durch welche das Projekt in mehrere Teilprojekte (Tp1, ...) unterteilbar ist, die auf verschiedenen verbindbaren Programmiergeräten (13, ...) projektierbar und/oder konfigurierbar sind, wobei Projektdaten eines Teilprojektes (Tp1, ...) auf dem Programmiergerät (13, ...) hinterlegbar sind, auf welchem das Teilprojekt (Tp1, ...) projektiert und/oder konfiguriert wurde,
- die Management-Einheit (12) Datensätze (18a, 18b, ...) erstellt und zentral abspeichert, die anzeigen, welche Teilprojekte (Tp1, ...) mit welchen Programmiergeräten (13, ...) in Wirkverbindung stehen, wobei diese Datensätze (18a, ...) durch die Programmiergeräte (13, ...) auslesbar und die Projektdaten der Teilprojekte (Tp1, ...) der in Wirkverbindung stehenden Programmiergeräte (13, ...) zwischen diesen Programmiergeräten (13, ...) direkt transferierbar sind.

4. Engineeringsystem nach Anspruch 3, **dadurch gekennzeichnet, dass** durch die Management-Einheit (12) anzeigbar ist, ob auf Projektdaten des jeweiligen Programmiergerätes (13, ...) zugegriffen werden kann.

5. Engineeringsystem nach Anspruch 3 oder 4, **dadurch gekennzeichnet, dass** eines der Programmiergeräte (13, ...) als Management-Einheit (12) betreibbar ist.

6. Engineeringsystem nach einem der Ansprüche 3 bis 5, **dadurch gekennzeichnet, dass** die Programmiergeräte (13, ...) über ein globales Netzwerk miteinander verbindbar sind.

7. Programmiergerät mit einer Management-Einheit (12) eines Engineering-Systems (11) nach einem der Ansprüche 3 bis 6.

## Claims

1. Method for planning and/or configuration of a project which represents an automation device (4) for controlling a technical installation, in which case the project data which is required for the planning and/or configuration of the automation device (4) can be stored in an engineering system (11), **characterized by** the following method steps:
- subdivision of the project into a number of project elements (Tp1, ...),
- planning and/or configuration of the project elements (Tp1, ...) on differently connectable programmers (13, ...), with project data for one project element (Tp1, ...) being stored on the programmer (13, ...) on which the project element (Tp1) has been planned and/or configured,
- central storage of data records (18a, ...) which indicate which project elements (Tp1, ...) are operatively connected to which programmers (13, ...), in which case these data records (18a, ...) can be read by the programmers (13, ...), and the project data for the project elements (Tp1, ...) of the programmers (13, ...) which are operatively connected can be transferred directly between these programmers (13, ...).

2. Method according to Claim 1, **characterized in that** it is possible to indicate whether it is possible to access the project data for the respective programmer (13, ...).

3. Engineering system for planning and/or configuration of a project which represents an automation device (4) for controlling a technical installation, in which case the project data which is required for the planning and/or configuration of the automation device (4) can be stored in an engineering system (11), **characterized in that**
- the engineering system is provided with a management unit (12), by means of which the project can be subdivided into a number of project elements (Tp1, ...) which can be planned and/or configured on different connectable programmers (13, ...), in which case project data for one project element (Tp1, ...) can be stored on the programmer (13, ...) on which the project element (Tp1, ...) has been planned and/or configured,
- the management unit (12) creates and centrally stores data records (18a, 18b, ...) which indicate which project elements (Tp1, ...) are operatively connected to which programmers (13, ...), in which case these data records (18a, ...) can be read by the programmers (13, ...), and the project data for the project elements (Tp1, ...) of the programmers (13, ...) which are operatively connected can be transferred directly between these programmers (13, ...).

4. Engineering system according to Claim 3, **characterized in that** the management unit (12) can indicate whether it is possible to access project data for the respective programmer (13, ...).

5. Engineering system according to Claim 3 or 4, **characterized in that** one of the programmers (13, ...) can be operated as a management unit (12).

6. Engineering system according to one of Claims 3 to 5, **characterized in that** the programmers (13, ...) can be connected to one another via a global network.

7. Programmer having a management unit (12) for an engineering system (11) according to one of Claims 3 to 6.

## Revendications

1. Procédé pour planifier et/ou pour configurer un projet qui représente un dispositif d'automatisation (4) pour commander une installation technique, d'après lequel les données de projet nécessaires pour planifier et/ou pour configurer le dispositif d'automatisation (4) peuvent être enregistrées dans un système d'ingénierie (11),
**caractérisé par** les étapes de procédé suivantes :
- le projet est subdivisé en plusieurs projets partiels (Tp1, etc.),
- les projets partiels (Tp1, etc.) sont planifiés et/ou configurés sur plusieurs appareils de programmation (13, etc.) qui peuvent être reliés, les données d'un projet partiel (Tp1, etc.) étant enregistrées sur l'appareil de programmation (13, etc.) où le projet partiel (Tp1) a été planifié et/ou configuré,
- des enregistrements (18a, etc.) qui indiquent quels projets partiels (Tp1, etc.) sont en liaison active avec quels appareils de programmation (13, etc.) sont mémorisés de façon centralisée, ces enregistrements (18a, etc.) peuvent être lus par les appareils de programmation (13, etc.) et les données des projets partiels (Tp1, etc.) dans les appareils de programmation (13, etc.) en liaison active peuvent être transférées directement entre ces appareil de programmation (13, etc.).

2. Procédé selon la revendication 1, **caractérisé en ce qu'**il est possible d'indiquer si on peut avoir accès aux données de projet de l'appareil de programmation (13, etc.) concerné.

3. Système d'ingénierie pour planifier et/ou pour configurer un projet qui représente un dispositif d'automatisation (4) d'une installation technique à commander, dans lequel les données de projet nécessaires pour planifier et/ou pour configurer le dispositif d'automatisation (4) peuvent être enregistrées dans un système d'ingénierie (11),
**caractérisé en ce que**
- le système d'ingénierie est équipé d'une unité de gestion (12) grâce à laquelle il est possible de subdiviser le projet en plusieurs projets partiels (Tp1, etc.) qui peuvent être planifiés et/ou configurés sur différents appareils de programmation (13, etc.) susceptibles d'être reliés, les données d'un projet partiel (Tp1, etc.) pouvant être enregistrées sur l'appareil de programmation (13, etc.) où le projet partiel (Tp1, etc.) a été planifié et/ou configuré,
- l'unité de gestion (12) élabore et mémorise de façon centralisée des enregistrements (18a, 18b, etc.) qui indiquent quels projets partiels (Tp1, etc.) sont en liaison active avec quels appareils de programmation (13, etc.), ces enregistrements (18a, etc.) peuvent être lus par les appareils de programmation (13, etc.) et les données des projets partiels (Tp1, etc.) dans des appareils de programmation (13, etc.) en liaison active peuvent être directement transférées entre ces appareils de programmation (13, etc.).

4. Système d'ingénierie selon la revendication 3, **caractérisé en ce que** l'unité de gestion (12) peut indiquer s'il est possible d'avoir accès à des données de projet dans l'appareil de programmation (13, etc.) concerné.

5. Système d'ingénierie selon la revendication 3 ou 4, **caractérisé en ce que** l'un des appareils de programmation (13, etc.) peut être exploité comme unité de gestion (12).

6. Système d'ingénierie selon l'une des revendications 3 à 5, **caractérisé en ce que** les appareils de programmation (13, etc.) peuvent être reliés les uns aux autres par un réseau global.

7. Appareil de programmation comportant une unité de gestion (12) d'un système d'ingénierie (11) d'après l'une des revendications 3 à 6.
